# EUROPEAN PATENT APPLICATION

(11) **EP 3 035 566 A1**
(43) Date of publication of application: **22.06.2016**
(21) Application number: 13891409.8
(22) Date of filing: 16.08.2013
(51) Int. Cl.: H04B 17/00, H04M 1/24

(54) **COMMUNICATION APPARATUS AND STORAGE METHOD**

(71) Applicant: Fujitsu Limited, Kawasaki-shi, Kanagawa 211-8588 (JP)
(72) Inventor: KURAMOTO, Keigo, Kawasaki-shi Kanagawa 211-8588 (JP); YAMAGISHI, Mikimasa, Kawasaki-shi Kanagawa 211-8588 (JP); ODE, Takayoshi, Kawasaki-shi Kanagawa 211-8588 (JP)
(74) Representative: Hutchison, James
(86) International application number: PCT/JP2013/072001
(87) International publication number: WO 2015/022751

(57) **Abstract**

A first storage unit (121) can be written to by a first computing circuit (111) and an operation log generated of a second computing circuit (112) and generated by the second computing circuit (112) is written thereto via the first computing circuit (111). A detecting unit (131) detects a failure in communication between the first computing circuit (111) and the second computing circuit (112). A control unit (132) changes a writing destination of the operation log from a first storage unit (121) to a second storage unit (122) that can be written to be the first computing circuit (111), when the failure is detected by the detecting unit (131).

## Description

### TECHNICAL FIELD

The present invention relates to a communications apparatus and saving method.

### BACKGROUND ART

Conventionally, technology that notifies a mobile telecommunications management station of failure information when connection to a mobile telecommunications line by a mobile telephone apparatus has failed is commonly known (for example, refer to Patent Document 1). Further, a mobile wireless communications terminal equipped with a communication central processing unit (CCPU) for communication control and an application CPU (ACPU) for application control is commonly known. In such a mobile wireless communications terminal, technology is known that saves to read-only memory (ROM) of the ACPU, history at the time of an occurrence of a CCPU error (for example, refer to Patent Document 2).

Patent Document 1: Japanese Laid-Open Patent Publication No. 2005-086749
Patent Document 2: Japanese Laid-Open Patent Document No. 2009-199317

### DISCLOSURE OF INVENTION

### PROBLEM TO BE SOLVED BY THE INVENTION

Nonetheless, with the technologies above, for example, when a failure occurs in the communication between the ACPU and the CCPU, a problem arises in that the operation log of the CCPU cannot be saved.

According to one aspect, one object of the present invention is to provide a communications apparatus and saving method that can save the operation log even when a communication failure between computing circuits occurs.

### MEANS FOR SOLVING PROBLEM

To solve the problems above and achieve an object, according to one aspect of the present invention, a communications apparatus and saving method are proposed where in the communications apparatus that includes a first computing circuit and a second computing circuit communicable with the first computing circuit and performing control of wireless communication with a third communications apparatus, an operation log of the second computing circuit and generated by the second computing circuit is written via the first computing circuit, to a first storage device that can be written to by the first computing circuit; a failure in communications between the first computing circuit and the second computing circuit is detected for; and when the failure is detected, a writing destination of the operation log is changed to a second storage unit that can be written to by the first computing circuit.

### EFFECT OF THE INVENTION

According to one aspect of the present invention, an effect is achieved in that an operation log can be saved even when a communication failure between computing circuits occurs.

### BRIEF DESCRIPTION OF DRAWINGS

FIG. 1A is a diagram depicting one example of a communications apparatus according to a first embodiment;
FIG. 1B is a diagram depicting one example of signal flow in the communications apparatus depicted in FIG. 1A;
FIG. 1C is a diagram depicting one example of hardware configuration of the communications apparatus;
FIG. 2A is a diagram depicting one example of a mobile device according to a second embodiment;
FIG. 2B is a diagram depicting one example of signal flow in the mobile device depicted in FIG. 2A;
FIG. 3 is a flowchart (part 1) depicting one example of a log saving process by a CCPU;
FIG. 4 is a flowchart (part 2) of one example of the log saving process by the CCPU;
FIG. 5 is a sequence diagram depicting one example of mobile device operation when no failure is occurring;
FIG. 6 is a sequence diagram depicting one example of mobile device operation when failure occurs;
FIG. 7 is a diagram depicting one example of an EF_ADN format;
FIG. 8 is a diagram depicting one example of an EF_SMS format;
FIG. 9 is a diagram depicting one example of a log storage dedicated format;
FIG. 10 is a diagram depicting one example of an operation log during mobile device failure;
FIG. 11 is a diagram depicting one example of terminal configuration of a SIM card;
FIG. 12 is a diagram depicting one example of an operation log writing method;
FIG. 13A is a diagram depicting an example of modification of the mobile device; and
FIG. 13B is a diagram depicting one example of signal flow in the example of modification of the mobile device depicted in FIG. 13A.

### BEST MODE(S) FOR CARRYING OUT THE INVENTION

Embodiments of a communications apparatus and a saving method according to the present invention will be described in detail with reference to the accompanying drawings.

### (First embodiment)

### (Communications apparatus according to first embodiment)

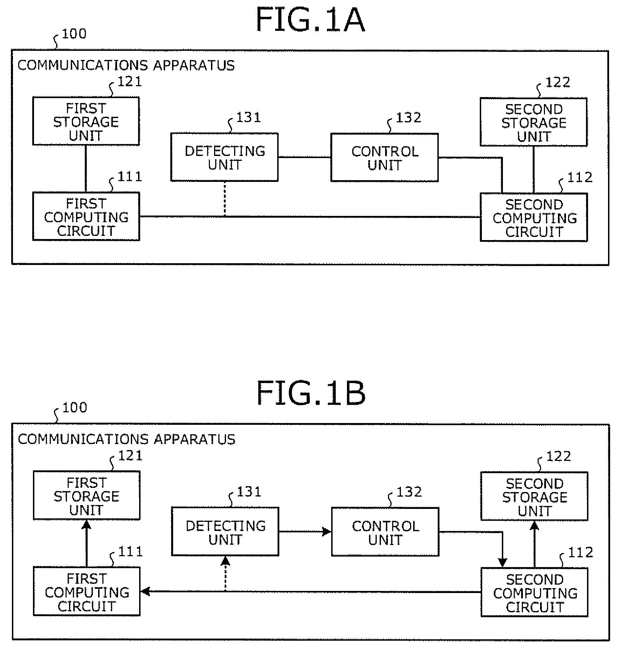

FIG. 1A is a diagram depicting one example of the communications apparatus according to a first embodiment. FIG. 1B is a diagram depicting one example of signal flow in the communications apparatus depicted in FIG. 1A. As depicted in FIGs. 1A and 1B, a communications apparatus 100 according to the first embodiment includes a first computing circuit 111, a second computing circuit 112, a first storage unit 121, a second storage unit 122, a detecting unit 131, and a control unit 132. The detecting unit 131 and the control unit 132 may be provided externally from the second computing circuit 112 or may be provided in the second computing circuit 112.

The communications apparatus 100 is a communications apparatus that performs wireless communication with other communications apparatuses. For example, the communications apparatus 100 is applicable to a mobile communications terminal such as a mobile telephone that performs wireless communication with a base station and other mobile communications terminals.

The first computing circuit 111 is a computing circuit capable of communicating with the second computing circuit 112. Further, the first computing circuit 111 writes to the first storage unit 121, an operation log output from the second computing circuit 112. For example, the first computing circuit 111 is an application CPU that executes an application.

The second computing circuit 112 is a communications circuit that controls wireless communication with other communications apparatuses different from the communications apparatus 100 (e.g., a base station, other mobile communications terminals, etc.). Further, the second computing circuit 112 is capable of communicating with the first computing circuit 111 through an interface. The second computing circuit 112, under the control of the control unit 132, outputs the operation log of the second computing circuit 112 to the first computing circuit 111 or the second storage unit 122. The operation log of the second computing circuit 112, for example, is an operation log related to control of wireless communications by the second computing circuit 112.

The first storage unit 121 is a storage unit for which writing thereto by the first computing circuit 111 is enabled and writing out from the first storage unit 121 is not enabled. To the first storage unit 121, the operation log of the second computing circuit 112 generated by the second computing circuit 112 is written via the first computing circuit 111. The first storage unit 121 may be internal memory of the first computing circuit 111, or external memory of the first computing circuit 111.

The second storage unit 122 is a storage unit for which writing thereto by the second computing circuit 112 is enabled. Further, the second storage unit 122 may be configured such that writing out from the second storage unit 122 is not enabled. The second storage unit 122 may be internal memory of the second computing circuit 112, or may be external memory of the second computing circuit 112.

The detecting unit 131 detects failures in communication between the first computing circuit 111 and the second computing circuit 112. The detecting unit 131, upon detecting a communication failure, notifies the control unit 132 of the detection of the communication failure.

The control unit 132 controls the writing destination of the operation log of the second computing circuit 112. For example, before the notification of the detection of communication failure by the detecting unit 131, the control unit 132 controls the second computing circuit 112 such that the operation log of the second computing circuit 112 is output to the first computing circuit 111. As a result, the operation log of the second computing circuit 112 is written to the first storage unit 121.

The control unit 132, upon being notified of the detection of a communication failure by the detecting unit 131, changes the writing destination of the operation log from the first storage unit 121 to the second storage unit 122. In this case, the control unit 132 controls the second computing circuit 112 such that the operation log of the second computing circuit 112 is written to the second storage unit 122.

Thus, the communications apparatus 100 is configured to store the operation log of the second computing circuit 112 to the first storage unit 121, via the first computing circuit 111. The communications apparatus 100 can switch the writing destination of the operation log to the second storage unit 122, when a communication failure between the first computing circuit 111 and the second computing circuit 112 is detected. As a result, even if a communication failure occurs between the first computing circuit 111 and the second computing circuit 112, the operation log of the second computing circuit 112 at the time of the occurrence of the failure can be retained.

### <Second storage unit>

The second storage unit 122, for example, is external memory that is removable from the communications apparatus 100. As a result, when failure of the communications apparatus 100 occurs, the operation log of the second computing circuit 112 can be retrieved easily.

When the communications apparatus 100 is a mobile telephone, the second storage unit 122, for example, is a subscriber identity module (SIM) card storing identification information of the mobile telephone. The identification information, for example, is a terminal number, an international mobile subscriber identity (IMSI). As a result, without the addition of external memory for storing the operation log of the second computing circuit 112, the operation log of the second computing circuit 112 at the time of the occurrence of a failure can be retained. The SIM card may be called a universal SIM (USIM), a user identity module (UIM), a CDMA SIM (CSIM), a universal integrated circuit card (UICC), and the like.

Nonetheless, internal memory of the communications apparatus 100 can be configured for the second computing circuit 112. In this case as well, the operation log of the second computing circuit 112 at the time of an occurrence of failure can be retained.

### (Hardware configuration of communications apparatus)

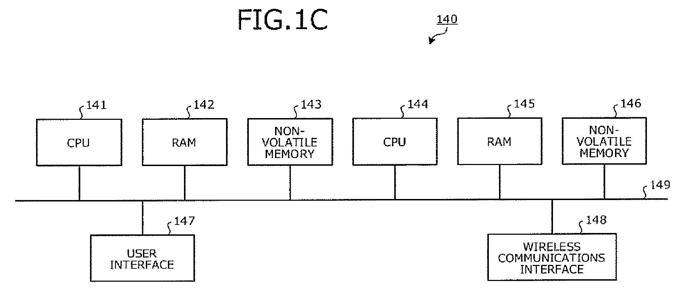

FIG. 1C is a diagram depicting one example of hardware configuration of the communications apparatus. The communications apparatus 100 depicted in FIGs. 1A and 1B, for example, can be realized by a communications apparatus 140 depicted in FIG. 1C. The communications apparatus 140 includes a CPU 141, random access memory (RAM) 142, non-volatile memory 143, a CPU 144, RAM 145, non-volatile memory 146, a user interface 147, and a wireless communications interface 148. The CPU 141, the RAM 142, the non-volatile memory 143, the CPU 144, the RAM 145, the non-volatile memory 146, the user interface 147, and the wireless communications interface 148 are connected by a bus 149.

The CPU 141 governs overall control of the communications apparatus 140. The RAM 142 is used as work area of the CPU 141. The non-volatile memory 143, for example, is non-volatile memory such as a magnetic disk and flash memory. The non-volatile memory 143 stores various types of programs for operating the communications apparatus 140. Programs stored in the non-volatile memory 143 are loaded to the RAM 142 and executed by the CPU 141. The non-volatile memory 143 further stores information such as various types of logs.

The CPU 144 controls wireless communication of the communications apparatus 140. The RAM 145 is used as a work area of the CPU 144. The non-volatile memory 146, for example, is non-volatile memory such as a magnetic disk and flash memory. The non-volatile memory 146 stores various types of programs that control wireless communication of the communications apparatus 140. Programs stored in the non-volatile memory 146 are loaded to the RAM 145 and executed by the CPU 144. The non-volatile memory 146 further stores information such as various types of logs.

The user interface 147, for example, includes an input device that receives operational input from the user, and an output device that outputs information to the user. The input device, for example, can be realized by keys (e.g., a keyboard), a remote controller, etc. The output device, for example, can be realized by a display, speakers, etc. Further, the input device and the output device may be realized by a touch panel and the like. The user interface 147, for example, is controlled by the CPU 141.

The wireless communications interface 148 is a communications interface that wirelessly communicates with apparatuses external to the communications apparatus 140 (e.g., a base station, other mobile communications terminals, etc.). The wireless communications interface 148, for example, is controlled by the CPU 144.

The first computing circuit 111 depicted in FIGs. 1A and 1B, for example, can be realized by the CPU 141. The second computing circuit 112 depicted in FIGs. 1A and 1B, for example, can be realized by the CPU 144. The first storage unit 121 depicted in FIGs. 1A and 1B, for example, can be realized by the non-volatile memory 143. The second storage unit 122 depicted in FIGs. 1A and 1B, for example, can be realized by the non-volatile memory 146. The detecting unit 131 and the control unit 132 depicted in FIGs. 1A and 1B, for example, can be realized by the CPU 144.

### (Second embodiment)

### (Mobile device according to second embodiment)

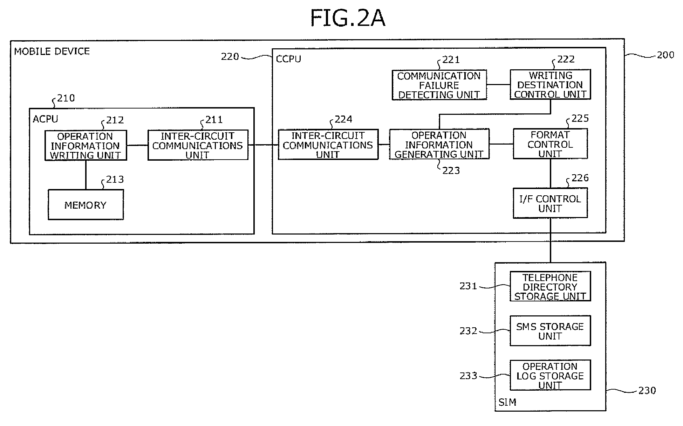

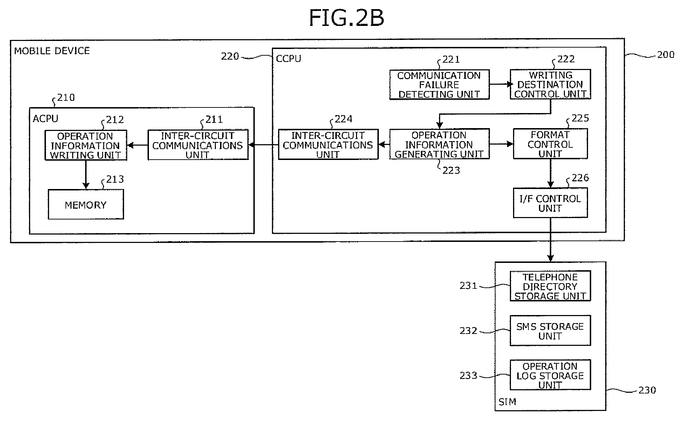

FIG. 2A is a diagram depicting one example of a mobile device according to a second embodiment. FIG. 2B is a diagram depicting one example of signal flow in the mobile device depicted in FIG. 2A. As depicted in FIGs. 2A and 2B, a mobile device 200 according to the second embodiment includes an ACPU 210 and a CCPU 220. A SIM 230 is external memory removable from the mobile device 200.

The ACPU 210 is an application CPU primarily performing user operations and application software processing. The ACPU 210 includes an inter-circuit communications unit 211, an operation information writing unit 212, and memory 213.

The inter-circuit communications unit 211 communicates with the CCPU 220 through an interface. The inter-circuit communications unit 211 further outputs to the operation information writing unit 212, an operation log of the CCPU 220 output from the CCPU 220. The operation information writing unit 212 writes to the memory 213, the operation log output from the inter-circuit communications unit 211.

The memory 213 is memory (e.g., flash memory) that is a user data region, log storage region, etc. In this manner, a user data region, log storage region, etc. are provided in the memory 213 connected to the ACPU 210, whereby the response performance of an application executed by the ACPU 210 is enhanced.

The CCPU 220 is a communication CPU that primarily performs processing for wireless communication with a network. The CCPU 220 includes a communication failure detecting unit 221, a writing destination control unit 222, an operation information generating unit 223, an inter-circuit communications unit 224, a format control unit 225, and an I/F control unit 226.

The communication failure detecting unit 221 detects communication failure between the ACPU 210 and the CCPU 220. In a communication failure between the ACPU 210 and the CCPU 220, for example, the loads on the ACPU 210 and the CCPU 220 become high and response becomes impossible, inconsistencies occur consequent to data loss, etc.

The communication failure detecting unit 221, when detecting communication failure between the ACPU 210 and the CCPU 220, outputs to the writing destination control unit 222, failure detection notification indicating detection of the communication failure. The communication failure detecting unit 221 may be realized by processing via data analysis of response signals, response signal timeouts by software, etc., or by hardware.

For example, the communication failure detecting unit 221 determines that communication failure has occurred between the ACPU 210 and the CCPU 220 when there is no response signal from the ACPU 210 for transmission data from the inter-circuit communications unit 224 for a given period or longer. Alternatively, the communication failure detecting unit 221 may determine that communication failure has occurred between the ACPU 210 and the CCPU 220 when an error has been detected from data received by the inter-circuit communications unit 224 from the inter-circuit communications unit 211.

The writing destination control unit 222 controls the writing destination of the operation log via the operation information generating unit 223. For example, the writing destination control unit 222, in the initial state, controls the operation information generating unit 223 such that the operation information generating unit 223 outputs the operation log of the CCPU 220 to the inter-circuit communications unit 224, whereby the operation log is written to the memory 213. Further, when failure detection notification is output from the communication failure detecting unit 221, the writing destination control unit 222 controls the operation information generating unit 223 such that the operation information generating unit 223 outputs the operation log of the CCPU 220 to the format control unit 225. As a result, the operation log is written to the SIM 230.

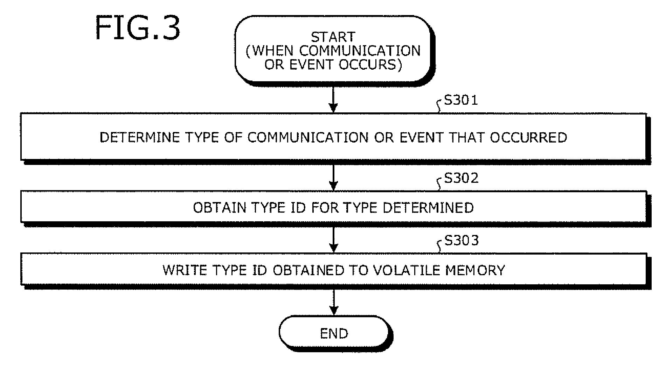

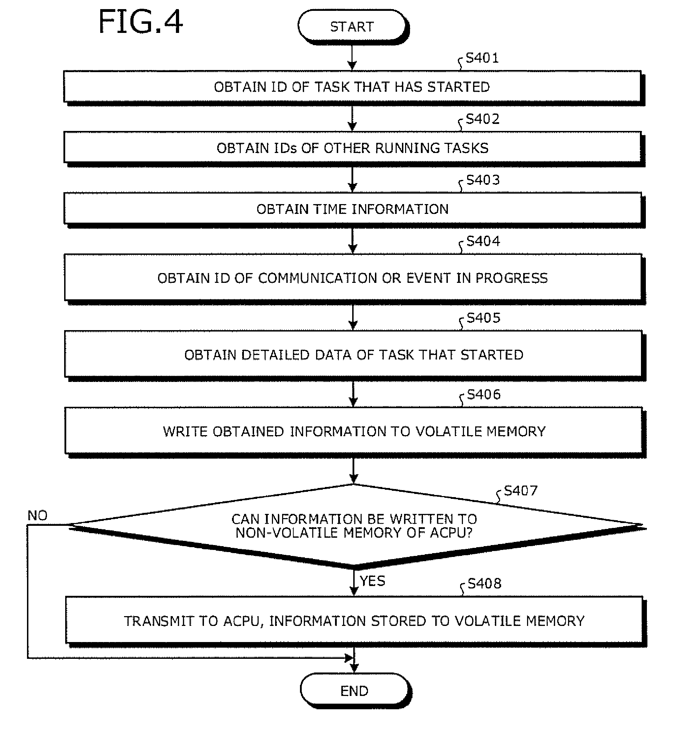

The operation information generating unit 223 generates the operation log of the CCPU 220. Generation of the operation log will be described hereinafter (for example, refer to FIGs. 3 and 4). The operation information generating unit 223, under the control of the writing destination control unit 222, outputs the generated operation log to the inter-circuit communications unit 224 or the format control unit 225. Further, the format of the operation log generated by the operation information generating unit 223, for example, is a format corresponding to the memory 213.

The inter-circuit communications unit 224 performs communication with the ACPU 210. As a result, the CCPU 220 is operable in conjunction with the ACPU 210. Further, the inter-circuit communications unit 224 transmits to the ACPU 210, the operation log of the CCPU 220 output from the operation information generating unit 223.

The format control unit 225 converts the format of the operation log output from the operation information generating unit 223 to a format that corresponds with the SIM 230. The format control unit 225 outputs the format-converted operation log to the I/F control unit 226.

The I/F control unit 226 writes to the SIM 230, the operation output from the format control unit 225. For example, the I/F control unit 226 writes the operation log to a telephone directory storage unit 231 of the SIM 230. Alternatively, the I/F control unit 226 may write the operation log to a SMS storage unit 232 of the SIM 230.

When information written in the telephone directory storage unit 231 and the SMS storage unit 232 is overwritten with the operation log, calls thereafter may become impossible or the telephone directory may become damaged. Therefore, configuration may be such that the I/F control unit 226 specifies an available region of the telephone directory storage unit 231 or the SMS storage unit 232 and the operation log is written to the specified region.

Alternatively, in the SIM 230, an operation log storage unit 233 may be provided for storing the operation log. In this case, the I/F control unit 226 writes the operation log to the operation log storage unit 233. As a result, a region for storing the operation log is established and, user data such as the telephone directory and the operation log can be easily identified.

The SIM 230 is external memory storing therein information such as a user contract, etc. The SIM 230 is directly or indirectly connected to the CCPU 220 such that access from the CCPU 220 to the SIM 230 is easy. As a result, when information such as the user contract, etc. is transmitted to a user managing apparatus on a wireless communications network, and authentication communication, etc. from the user managing apparatus and saving of authentication data thereof to the SIM is performed, signal processing can be performed efficiently.

The SIM 230 includes the telephone directory storage unit 231 and the SMS storage unit 232, in addition to a region storing therein information such as the user contract, etc.. Further, the SIM 230 may further include the operation log storage unit 233. The telephone directory storage unit 231 is a region (EF_ADN) storing therein data of the telephone directory of the user of the mobile device 200. The SMS storage unit 232 is a region (EF_SMS) storing therein user data related to short message service (SMS) by the mobile device 200.

Access to the telephone directory storage unit 231 and the SMS storage unit 232, for example, is limited, and by inputting a password (PIN1/PIN2), writing to the telephone directory storage unit 231 and the SMS storage unit 232 is enabled. In other words, in the telephone directory storage unit 231 and the SMS storage unit 232, by using PIN1/PIN2, security is established. The respective PIN1/PIN2 are personal identification numbers (PINs) of 4 to 8 digits. The contents and size of the information stored in the telephone directory storage unit 231 and the SMS storage unit 232 complies with 3rd Generation Partnership Project (3GPP), etc.

Thus, when communication failure between the ACPU 210 and the CCPU 220 is detected, the mobile device 200 changes the writing destination of the operation log of the CCPU 220 from the memory 213 provided in the ACPU 210, to the SIM 230 connected to the CCPU 220. As a writing protocol, command, etc. of the operation log after the change, for example, that which complies with ETSI TS102.221 can be used.

### (Log saving process by CCPU)

FIG. 3 is a flowchart (part 1) depicting one example of a log saving process by the CCPU. The CCPU 220 executes the steps depicted in FIG. 3, for example, when communication or an event occurs. Communication includes, for example, audio communication, video calls, mobile device data communication, data communication by PC connection, short messaging (SMS), and supplementary services. Events include, for example, powering on/off of the mobile device 200, battery changes, service area/out of service area detection, etc.

The CCPU 220 determines the type of communication or event that occurred (step S301). The CCPU 220 obtains type ID for the type determined at step S301 (step S302). The type ID, for example, is associated with the types of communication and events and pre-stored in the memory of the mobile device 200. The CCPU 220 writes the type ID obtained at step S302 to volatile memory (e.g., the RAM 145) (step S303), and ends the series of operations.

In this manner, the CCPU 220 assigns IDs to information of functions, e.g., communication, events, etc., operating in the mobile device 200 and writes the information to volatile memory. Further, when communication or an event that has occurred has ended, the CCPU 220 may be configured to erase the corresponding ID from the volatile memory.

FIG. 4 is a flowchart (part 2) of one example of the log saving process by the CCPU. The CCPU 220, for example, together with the operations depicted in FIG. 3, traces tasks running in the CCPU 220, and executes the steps depicted in FIG. 4, when a task starts. The CCPU 220 obtains the ID of a task that has started (source task) (step S401). Task IDs, for example, are associated with tasks and pre-stored in the memory of the mobile device 200. The CCPU 220 further obtains the IDs of other running tasks (step S402).

The CCPU 220 obtains time information indicating the current time to identify the time at which an event occurred (step S403). The CCPU 220 obtains the ID of communication or an event in progress (step S404). The ID obtained at step S404, for example, is the ID written to the volatile memory at step S303 in FIG. 3.

The CCPU 220 obtains detailed data of the task that started (step S405). The sequence of steps S401 to S405 may be interchanged. Next, the CCPU 220 writes the information obtained at steps S401 to S405 to volatile memory (e.g., the RAM 145) (step S406). The CCPU 220 determines whether the information written to the volatile memory at step S406 can be written to non-volatile memory of the ACPU 210 (step S407).

At step S407, whether the information can be written to the non-volatile memory is determined by whether access from the CCPU 220 to the ACPU 210 is possible. For example, the CCPU 220 determines that writing to the non-volatile memory of the ACPU 210 is impossible when a given period or longer has not elapsed since the last access to the ACPU 210. Further, when determining that the given period of longer has elapsed since the last access to the ACPU 210, the CCPU 220 determines that writing to the non-volatile memory of the ACPU 210 is possible. Further, for example, configuration may be such that when the power source of the mobile device 200 is off, writing to the non-volatile memory of the ACPU 210 is determined to be possible.

At step S407, if writing is not possible (step S407: NO), the CCPU 220 ends the series of operations. If writing is possible (step S407: YES), the CCPU 220 transmits to the ACPU 210 as the operation log, the information stored to the volatile memory at step S406 (step S408), and ends the series of operations.

Communication, an event, etc. occurring at the CCPU 220 is established as a result of plural tasks running at the CCPU 220. Therefore, by each of the steps depicted in FIG. 4, information before and after the communication or event can be retained as the operation log.

In FIG. 4, although a case is described where the operation log is not transmitted to the ACPU 210 when it is determined that writing to the non-volatile memory of the ACPU 210 is not enabled, the CCPU 220 may standby until writing to the non-volatile memory of the ACPU 210 becomes enabled and then, transmit the operation log to the ACPU 210.

### (Mobile device operation when no failure is occurring)

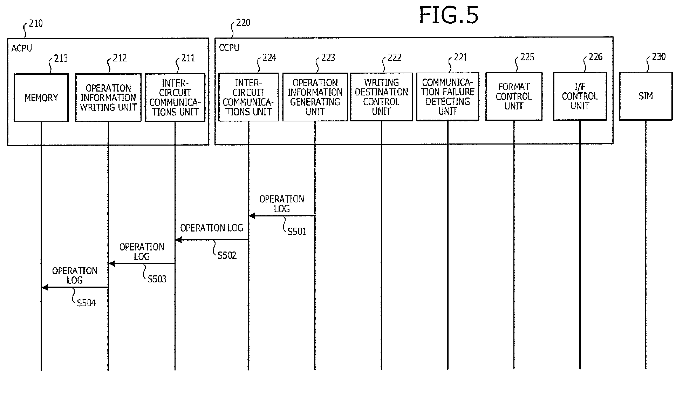

FIG. 5 is a sequence diagram depicting one example of mobile device operation when no failure is occurring. When no communication failure between the ACPU 210 and the CCPU 220 is detected, for example, at step S408 depicted in FIG. 4, the mobile device 200, for example, operates as depicted in FIG. 5.

The operation information generating unit 223 of the CCPU 220 outputs the operation log of the CCPU 220 to the inter-circuit communications unit 224 (step S501). The inter-circuit communications unit 224 transmits to the ACPU 210, the operation log output at step S501 (step S502).

The inter-circuit communications unit 211 of the ACPU 210 outputs to the operation information writing unit 212, the operation log transmitted at step S502 (step S503). The operation information writing unit 212 writes to the memory 213, the operation log output at step S503 (step S504), and ends the series of operations.

### (Mobile device operation when failure occurs)

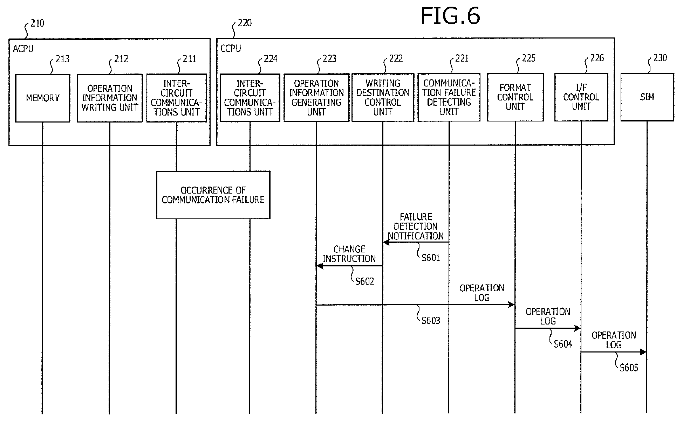

FIG. 6 is a sequence diagram depicting one example of mobile device operation when failure occurs. When communication failure between the ACPU 210 and the CCPU 220 occurs, the mobile device 200, for example, operates as depicted in FIG. 6.

The communication failure detecting unit 221 of the CCPU 220 outputs to the writing destination control unit 222, failure detection notification indicating detection of communication failure between the ACPU 210 and the CCPU 220 (step S601). The writing destination control unit 222 outputs to the operation information generating unit 223, a change instruction instructing the writing destination of the operation log to be changed from the memory 213 to the SIM 230 (step S602).

The operation information generating unit 223 outputs the operation log of the CCPU 220 to the format control unit 225 (step S603). The format control unit 225 configures the format of the operation log output at step S603 and outputs the formatted operation log to the I/F control unit 226 (step S604). The I/F control unit 226 writes to the SIM 230, the operation log output at step S604 (step S605), and ends the series of operations.

### (EF_ADN format)

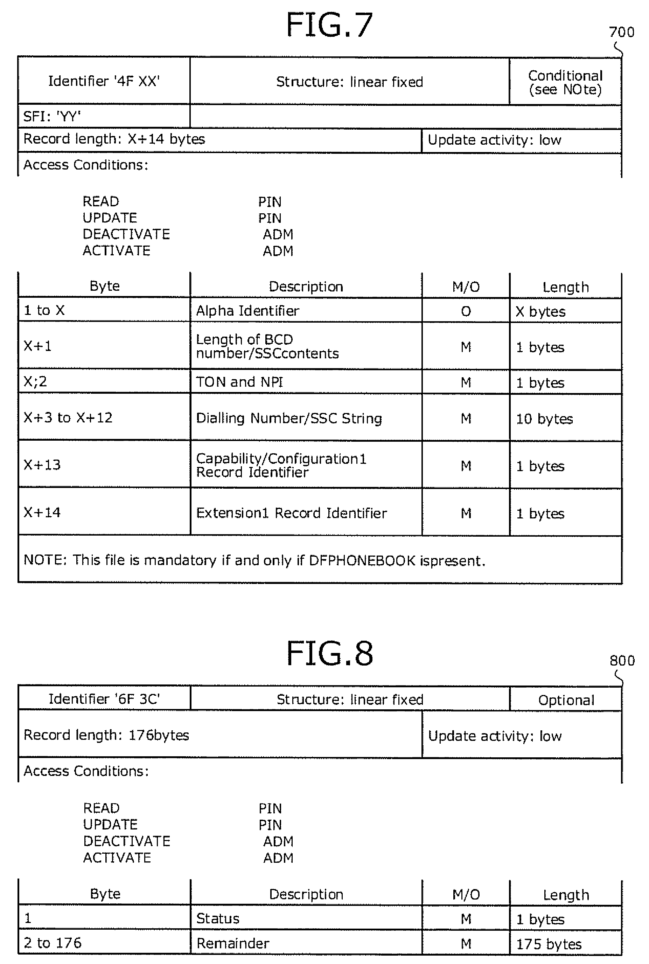

FIG. 7 is a diagram depicting one example of an EF_ADN format. In the formatting of the telephone directory storage unit 231 of the SIM 230, for example, an EF_ADN format 700 depicted in FIG. 7 can be used. The EF_ADN format 700 is an elementary file (EF) of the SIM 230 and includes telephone numbers (dialing number/SSC string) and names (alpha identifier) in the telephone directory.

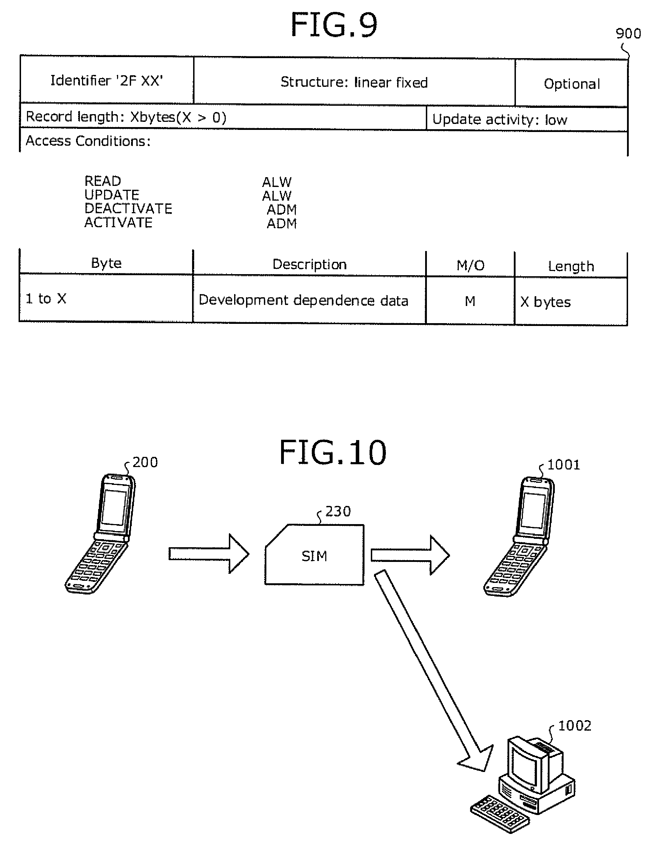

When the operation log is stored in a format complying with TS31.102, in the name (alpha identifier) region, the operation log can be stored as a character string of a GSM 7-bit format or a UCS2 format. In this case, since the operation log is stored as a character string, the operation log can be displayed using a user interface (e.g., the user interface 147) such as a screen of the mobile device 200. Further, the operation log of the mobile device 200 can be displayed by various types of apparatuses that can connect to the SIM 230, such as PCs and terminals different from the mobile device 200 (for example, refer to FIG. 10).

In this manner, configuration may be such that, in a file that includes telephone numbers and names, the I/F control unit 226 writes the operation log in a predetermined format in a region in which a telephone number or a name is stored.

Alternatively, configuration may be such that based on the EF_ADN format 700, a new format is defined and the operation log is stored. For example, in the head byte of the EF_ADN format 700, a log storage dedicated tag may be newly defined. As a result, regions of names (alpha identifiers), telephone numbers (dialing number/SSC strings), etc. of the EF_ADN format 700 can be used for log storage. Further, for example, as a format of data to be used, a tag 0x8X (X≠0, 1, 2) other than the SMS default 7-bit format, UCS2 format, etc. can be used.

In this manner, by defining a format for the operation log, constraints on data regions and useable character string formats disappear, enabling the storable operation log volume to be increased. Further, the developing manufacturer of the mobile device 200 can arbitrarily configured the data format.

### (EF_SMS format)

FIG. 8 is a diagram depicting one example of an EF_SMS format. In the formatting of the SMS storage unit 232 of the SIM 230, for example, an EF_SMS format 800 depicted in FIG. 8 can be used.

When the operation log is stored in EF_SMS in which SMS data is stored, for example, a format complying with the 3GPP TS31.102 standard can be used. In this case, a header corresponding to the SMS format and the operation log can be stored as a character string in a remainder region of EF_SMS. In the header, since a format enabling time information to be stored is pre-defined, the header can be used for the log storage time.

In this case, since the operation log is stored as a character string, the operation log can be displayed using a user interface (e.g., the user interface 147) such as a screen of the mobile device 200. Further, the operation log of the mobile device 200 can be displayed by various types of apparatuses that can connect to the SIM 230, such as PCs and terminals different from the mobile device 200 (for example, refer to FIG. 10).

Alternatively, configuration may be such that based on the EF_SMS format 800, a new format is defined and the operation log is stored. In the head byte of EF_SMS, a status region configuring read and unread SMS states is defined. At present, among the 8 bytes of the status region, 5 bytes are defined and the remaining 3 bytes are not used.

Therefore, among the unused 3 bytes of the region, at least 1 byte is defined to be dedicated to log storage; the rest of the region can be used for log storage. For example, by providing bit definitions such as developer space for the developer, the developer can arbitrarily determine and use data formats.

Further, in a status region (predetermined region) of a file related to SMS, a region may configured for information indicating whether a region to which the operation log is written is present. In this manner, in an unused region in an existing format, by configuring a region for information identifying whether a region for storing the operation log is present, an operation log written in an existing format can be easily retrieved.

### (Log storage dedicated format)

FIG. 9 is a diagram depicting one example of a log storage dedicated format. In formatting of the operation log storage unit 233 the SIM 230, for example, a dedicated format 900 depicted in FIG. 9 can be used. In the dedicated format 900, a log storage dedicated EF region not defined under 3GPP TS31.102 is defined. As a result, log storage can be performed easily while the user data stored in the SIM 230 can be prevented from being affected.

In the dedicated format 900, security requisites for reading and writing need not be provided. Further, an operation log in the dedicated format 900 is directly below the master file (MF). As a result, after loading of the SIM 230 to the mobile device 200 is detected, the SIM 230 can be accessed at any time without conscious execution of an application selection procedure, PIN input by the user, etc. Further, without particularly providing constraints on registrable counts, size, etc., an EF defined by the dedicated format 900 can be set to a large count, size, etc. according to conventional SIM standard. In other words, the format can also be changed according to the size (volume) and contents of the log to be obtained.

In the formatting of an EF defined by the dedicated format 900, for example, a log collection start time, operations subject to log collection, log collection counts, etc., may be stored in a region independent from that of the operation log.

For each log collection, an operation log may be regarded as an EF, or an EF of a hierarchical structure. As a format of the data to be used, the GSM 7-bit format, UCS2 format, SMS default 7-bit format, or UCS2 format described above can be used. Alternatively, use of a new format is also possible.

In this manner, in the SIM 230, the I/F control unit 226 may write the operation log to a dedicated region (the operation log storage unit 233) for storing the operation log. As a result, log storage can be performed easily while mitigating effects on user data stored in the SIM 230. In this case, the I/F control unit 226 writes information of a format predetermined with respect to at least any one among an operation log written in the operation log storage unit 233 and the operation log storage unit 233.

Further, configuration may be such that the I/F control unit 226 controls whether access restrictions are to be implemented with respect to at least any one among an operation log written in the operation log storage unit 233 and the operation log storage unit 233.

(Operation log extraction during mobile device failure)

FIG. 10 is a diagram depicting one example of an operation log during mobile device failure. As described above, when communication failure occurs between the ACPU 210 and the CCPU 220, the mobile device 200 writes the operation log to the SIM 230, which is removable from the mobile device 200.

As a result, for example, even when there is no power supplied to the mobile device 200 consequent to the failure, as depicted in FIG. 10, the SIM 230 to which the operation log has been saved is removed and the operation log can be read out by another mobile device 1001 or SIM reading device 1002 (SIM card reader).

### (Terminal configuration of SIM card)

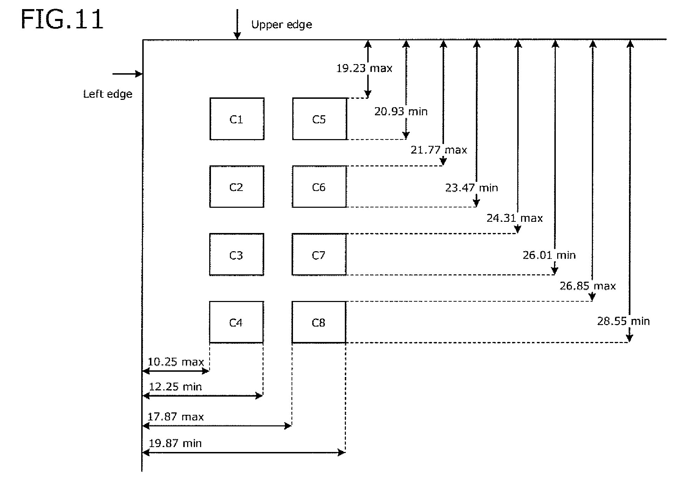

FIG. 11 is a diagram depicting one example of terminal configuration of the SIM card. The SIM 230 (SIM card) depicted in FIGs. 2A and 2B, for example, in compliance with ISO 7816-2, includes 8 terminals C1 to C8 depicted in FIG. 11. The terminal C4 and the terminal C8 are used as universal serial bus (USB) terminals. For example, by complying with USB Ver2., high-speed data transfer is enabled.

In general, the operation logs become large. Further, to improve the quality of a product, a wide variety of operation logs are preferably collected. Thus, when an operation log is saved to the SIM 230, by setting the USB terminals C4, C8 as the terminals to be used, high-speed collection of the operation logs is enabled. In other words, when an operation log is written to the SIM 230, the I/F control unit 226 switches from a writing method using the terminal C7 to a writing method that uses USB used by the terminals C4 and C8. In this manner, the I/F control unit 226 may control the method of transferring the operation log to the SIM 230.

### (Operation log writing method)

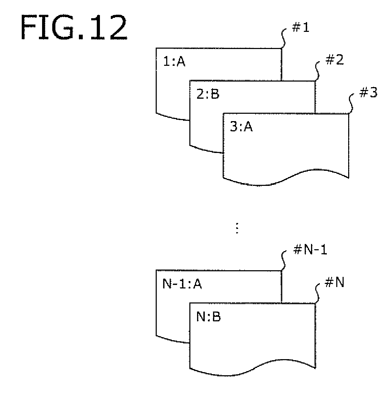

FIG. 12 is a diagram depicting one example of an operation log writing method. The maximum count of operation logs that can be written to the SIM 230 is assumed to be N. Operation logs #1 to #N depicted in FIG. 12 are first to N-th operation logs written to the SIM 230 by the I/F control unit 226.

The I/F control unit 226 writes a new operation log to an available region of the SIM 230, when the write count of operation logs to the SIM 230 has not reached N (available region is present). Further, the I/F control unit 226 overwrites with a new operation log, the operation log that is oldest among operation logs that have been written to the SIM 230, when the write count of operation logs to the SIM 230 has reached N (no available region is present).

When writing an operation log to the SIM 230, the I/F control unit 226 may associate a priority level that is based on the type of log to be written. In the example depicted in FIG. 12, the I/F control unit 226 associates a priority level A to an important operation log and writes the operation log; and associates a priority level B to an unimportant operation log and writes the operation log.

Then, when the write count of the operation logs to the SIM 230 reaches N, the I/F control unit 226 overwrites with a new operation log, the oldest operation log of the priority B among the N operation logs written to the SIM 230. As a result, an important operation log can be saved without being overwritten.

### (Example of modification of mobile device)

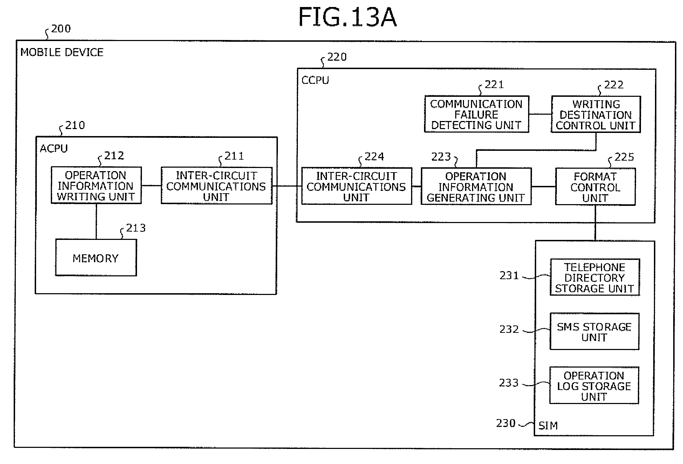

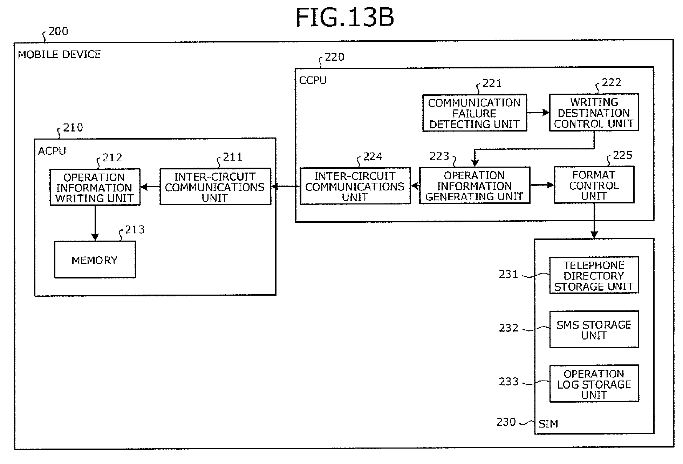

FIG. 13A is a diagram depicting an example of modification of the mobile device. FIG. 13B is a diagram depicting one example of signal flow in the example of modification of the mobile device depicted in FIG. 13A. In FIGs. 13A and 13B, components identical to those depicted in FIGs. 2A and 2B are given the same reference numerals used in FIGs. 2A and 2B and description thereof is omitted hereinafter. As depicted in FIGs. 13A and 13B, the SIM 230 of the mobile device 200 may be an internal soft SIM provided in the mobile device 200. In this case, configuration may omit the I/F control unit 226 depicted in FIGs. 2A and 2B.

In this manner, the mobile device 200 according to the second embodiment enables the writing destination of the operation log of the CCPU 220 to be switched to the SIM 230, when communication failure between the ACPU 210 and the CCPU 220 is detected. As a result, even when communication failure occurs between the ACPU 210 and the CCPU 220, the operation log of the CCPU 220 at the time of the failure can be retained.

As described, the communications apparatus and the saving method enable an operation log to be save even when a communication failure between computing circuits occurs. Therefore, for example, improvement of apparatus quality by analysis of the failure based on the operation log can be facilitated.

### EXPLANATIONS OF LETTERS OR NUMERALS

100, 140 communications apparatus
111 first computing circuit
112 second computing circuit
121 first storage unit
122 second storage unit
131 detecting unit
132 control unit
141, 144 CPU
142, 145 RAM
143, 146 non-volatile memory
147 user interface
148 wireless communications interface
149 bus
200, 1001 mobile device
210 ACPU
211, 224 inter-circuit communications unit
212 operation information writing unit
213 memory
220 CCPU
221 communication failure detecting unit
222 writing destination control unit
223 operation information generating unit
225 format control unit
226 I/F control unit
230 SIM
231 telephone directory storage unit
232 SMS storage unit
233 operation log storage unit
700 EF_ADN format
800 EF_SMS format
900 dedicated format
1002 SIM reading device

## Claims

1. A communications apparatus including a first computing circuit and a second computing circuit communicable with the first computing circuit and performing control of wireless communication with a third communications apparatus, the communications apparatus comprising:
a first storage device that can be written to by the first computing circuit and to which an operation log of the second computing circuit and generated by the second computing circuit is writable via the first computing circuit;
a detecting circuit configured to detect a failure in communication between the first computing circuit and the second computing circuit; and
a control circuit configured to change a writing destination of the operation log to a second storage device that can be written to by the first computing circuit, when the failure is detected by the detecting circuit.

2. The communications apparatus according to claim 1, wherein
the second storage device is external memory removable from the communications apparatus.

3. The communications apparatus according to claim 1, wherein
the second storage device is internal memory of the communications apparatus.

4. The communications apparatus according to any one of claims 1 to 3, wherein
the control circuit writes the operation log generated by the second computing circuit to the second storage device in a format that corresponds to the second storage device, when the writing destination is changed to the second storage device.

5. The communications apparatus according to claim 4, wherein
the control circuit writes the operation log to a region that is in an existing format of the second storage device and configured for a purpose other than writing of the operation log.

6. The communications apparatus according to claim 4, wherein
the control circuit configures a new region in the existing format of the second storage device and writes the operation log to the new region.

7. The communications apparatus according to claim 6, wherein
the control circuit configures in an unused region in the existing format, a region for information indicating whether the new region is present.

8. The communications apparatus according to claim 4, wherein
the control circuit writes the operation log to the second storage device in formatting predetermined according to the format.

9. The communications apparatus according to claim 4, wherein
the communications apparatus is applied to a mobile telephone,
the second storage device is a subscriber identity module storing a file that includes a telephone number and a name, and
the control circuit writes the operation log in predetermined formatting to a region storing the telephone number or the name of the file.

10. The communications apparatus according to claim 4, wherein
the communications apparatus is applied to a mobile telephone,
the second storage device is a subscriber identify module storing a file related to short message service, and
the control circuit configures in a predetermined region of the file, a first region for information indicating whether a second region to which the operation log is written is present and writes the operation log in arbitrary formatting to the second region.

11. The communications apparatus according to claim 4, wherein
the second storage device has a dedicated region for storing the operation log, and
the control circuit writes the operation log to the dedicated region.

12. The communications apparatus according to claim 11, wherein
the control circuit controls whether access restriction is to be implemented with respect to at least any one among the written operation log and the dedicated region.

13. The communications apparatus according to claim 11 or 12, wherein
the control circuit writes information in formatting predetermined with respect to at least any one among the written operation log and the dedicated region.

14. The communications apparatus according to any one of claims 1 to 13, wherein
the first computing circuit is a computing circuit that executes an application.

15. The communications apparatus according to any one of claims 1 to 14, wherein
the control circuit controls a method of transferring the operation log to the second storage device.

16. A saving method in a communications apparatus including a first computing circuit and a second computing circuit communicable with the first computing circuit and performing control of wireless communication with a third communications apparatus, the saving method comprising:
writing via the first computing circuit, an operation log of the second computing circuit and generated by the second computing circuit, to a first storage device that can be written to by the first computing circuit;
detecting a failure in communication between the first computing circuit and the second computing circuit; and
changing a writing destination of the operation log to a second storage device that can be written to by the first computing circuit, when detecting the failure.
